# EUROPEAN PATENT SPECIFICATION

(11) **EP 0 822 750 B1**
(45) Date of publication and mention of the grant of the patent: **28.10.1998**
(21) Application number: 96919658.3
(22) Date of filing: 03.05.1996
(51) Int. Cl.: A22B 1/00

(54) **METHOD OF DELIVERING ANIMALS TO A PROCESSING AREA AND AN APPARATUS THEREFOR**
VERFAHREN UND VORRICHTUNG ZUR BESCHICKUNG VON TIEREN IN EINE VERARBEITUNGSZONE
PROCEDE D'ACHEMINEMENT D'ANIMAUX VERS UNE ZONE DE TRAITEMENT ET APPAREIL DESTINE A CET EFFET

(30) Priority: 05.05.1995 EP 95106862
(43) Date of publication of application: 11.02.1998
(73) Proprietor: G. Van Wijnsberghe en Co. N.V., 8630 Veurne (BE)
(72) Inventor: VANHAECKE, Hubert, B-8630 Veurne (BE)
(74) Representative: Bird, Ariane
(86) International application number: EP9601840
(87) International publication number: WO9634531

(56) References cited:
- EP-A- 0 561 338
- WO-A-93/16599
- DE-A- 4 226 596
- US-A- 3 118 174

## Description

The present invention relates to a method delivering, and in particular to sequencing the delivery of animals to a handling area, and an apparatus for carrying out the method. The present invention is particularly suitable for use in slaughter houses but may also be used for branding, weighing, sheep shearing, or the like.

Fig. 1 shows a conventional delivery system known from US-A-3 828 396, comprising a passage or runway 1, through which animals are driven forward to an entrance gate 2 and a handling area 5 for further conveyance and/or treatment of the animals. The gate 2 is operated by an operator so that only one animal at a time is allowed through to the handling area 5. The gate 2 comprises a rotatable door 3 which is operated by the handle 4. Such a rotatable door is known from GB-A-764 138. These systems have the disadvantage that an operator is required to operate the gate.

An apparatus for conveying animals is known from EP-A-0 019 332, which comprises two parallel endless conveyors at the exit of the runway and defining a V-shaped passageway for restraining the animals and moving them forwards individually. With apparatus for electrical stunning of animals it is particularly important that each animal to be stunned is separated from the next animal so that the second animal does not touch the first animal and receive a mild shock when the first animal is stunned. Such a shock would alarm the second animal without stunning it. This could deteriorate meat quality. It is generally true that animals should be maintained in a calm and relaxed condition immediately before processing or handling as every unnecessary alarm of the animal can reduce final meat quality. One way of separating animals before processing is known which comprises two pairs of endless conveyors arranged in series. The second conveyor is driven faster than the first conveyor so that a separation is provided automatically between adjacent animals. This known system has the disadvantages that the two conveyors increase installed cost, they take up a considerable space and increase the daily cleaning requirement and maintenance.

A further sytem is known from EP - A - 0 561 338 which includes a device to block the forward movement of animals to be slaughtered, particularly pigs, which can be moved from an open to a closed position. The animal contacting part of the blocking device is provided by a system of rollers which move apart the more the animal pushes forward.

US 3,118,174 describes a structure for immobilization of animals preliminary to slaughtering which includes rotatable gates for controlling the access of the animals to a anaesthetising cage. The gates are activated by a ram from a closed position to an open position. The gates are designed so that opening of the gates does not frighten the animal nor push it backwards.

### Summary of the invention

In accordance with the present invention a unit is provided for delivering animals to a handling area, comprising:
a runway for delivering animals towards said handling area, said runway having outer fencing or walls;
runway barrier means;
said runway barrier means including at least first and second gate means;
said first and second gate means extending respectively from said outer walls or fencing of said runway to first locations adjacent the centre of said runway in a first position for preventing animals from leaving the runway and entering the handling area; and
at least one of said first or second gate means being adapted to be moveable from said corresponding first location to a second position for allowing animals to enter said handling area, characterised in that:
said at least one of said first and second gate means co-operates with the other of said first and second gate means to provide elastic gripping means for elastically gripping the head of the animal when said first and second gates means are in said first position adjacent the centre of said runway, so that when the animal moves forward the gripping pressure increases and said at least one of said first and second gate means moves further towards the centre of said runway and when the animal moves back the gripping pressure reduces.

Further, according to the invention a method is provided of delivering animals from a runway having outer fencing or walls to a handling area, comprising the steps of:
step 1: introducing animals into said runway and allowing them to move towards said handling area;
step 2: allowing a first animal into said handling area from said runway;
step 3: moving at least a first gate means from a first position adjacent said outer fences or walls to a second position adjacent the centre of said runway so as to prevent a second animal from entering said handling area, said first gate means co-operating with a second gate means to elastically grip the head of the animal when in said second position adjacent the centre of said runway, so that when the animal moves forward the gripping pressure increases and said first gate means moves further towards the centre of said runway and when the animal moves back the gripping pressure reduces; and
step 4: after processing of said first animal, moving at least said first gate means back to said first position and repeating steps 2 to 4.

The present invention may provide the advantage that animals may be delivered a handling area in a calm and relaxed state.

The present invention may provide the further advantage that it is readily adaptable to automatic delivery of animals.

The present may have the additional advantage that it provides an apparatus which is compact and requires little cleaning time.

The present invention may provide the advantage that a high throughput of animals can be achieved.

The present invention may provide the advantage that animals of different sizes can be separated reliably.

The dependent claims describe additional embodiments of the present invention. The present invention, its embodiments and its advantages will be described with respect to the following drawings.

### Brief description of the drawings

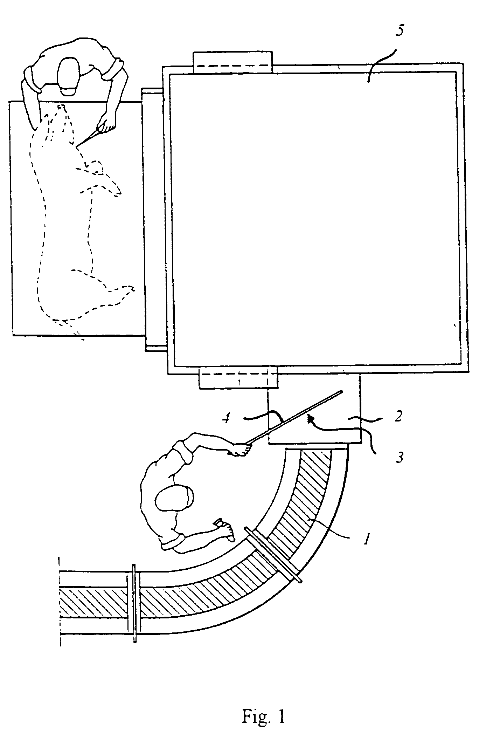

Fig. 1 shows a conventional delivery unit for animals,
Fig. 2 shows a side view of a delivery unit in accordance with a first embodiment of the present invention.
Fig. 3 shows a top view of a delivery unit according to the first embodiment of the present invention with the runway barrier means in the closed position,
Fig. 4 shows a further top view of a delivery unit according to the present invention when the runway barrier means is in the open position,
Fig. 5 shows a side view of a second embodiment of the delivery unit according to the present invention,
Fig. 6 shows alternative jaw arrangements according to the present invention, and
Fig. 7 shows alternative jaw arrangements according to the present invention.

### Description of the preferred embodiments of the invention

The present invention will be described with reference to a combined conveyor and electrical stunning machine for use in a slaughter house or for CO₂ stunning boxes. The present invention is not limited thereto. The handling area in accordance with the present invention may be an anaesthetising unit, a sheep shearing pen, a branding or marking pen, a weighing pen or any similar area required for processing, handling or conveying of animals such as pigs, sows, cows, heifers, sheep, horses and the like.

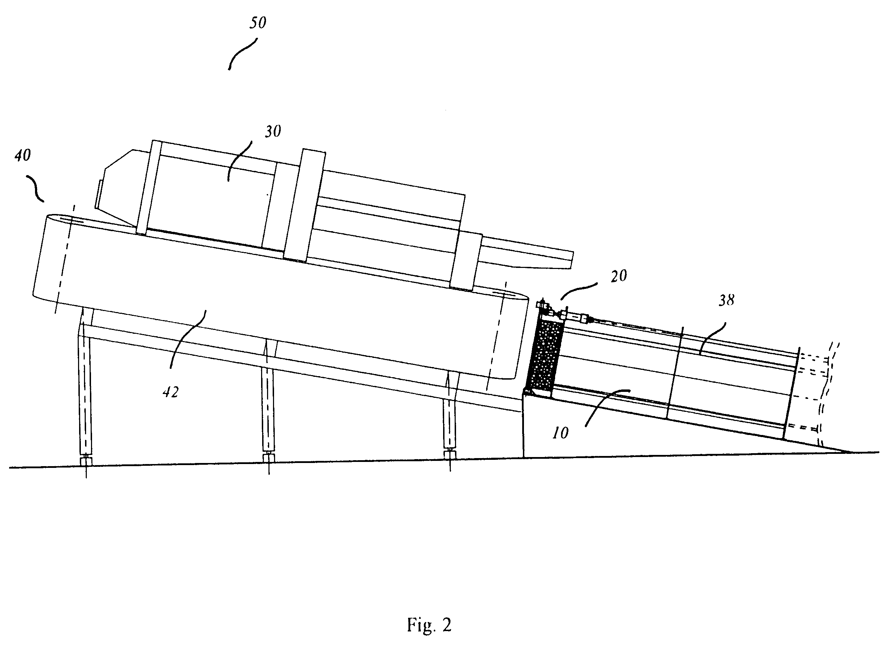

Fig. 2 shows the general side view of a first embodiment of the present invention. Animals such as pigs are lead into the passageway or runway 10 and move or are urged up the slope towards the handling area 50. The runway 10 is bounded by outer walls or fences (only the near side fence 38 is shown). The handling area 50 includes a pair of parallel conveyors (only one is shown: 42) and a stunning unit 30 which may be advantageously the stunning device according to PCT/BE 92/00005. Between the end of the runway 10 and the start of the conveyor 42 a runway barrier means 20 is provided. As with conventional gates the runway barrier means 20 has an open state in which an animal may proceed from the runway 10 to the handling area 50 and a closed state in which access to the handling area is prevented.

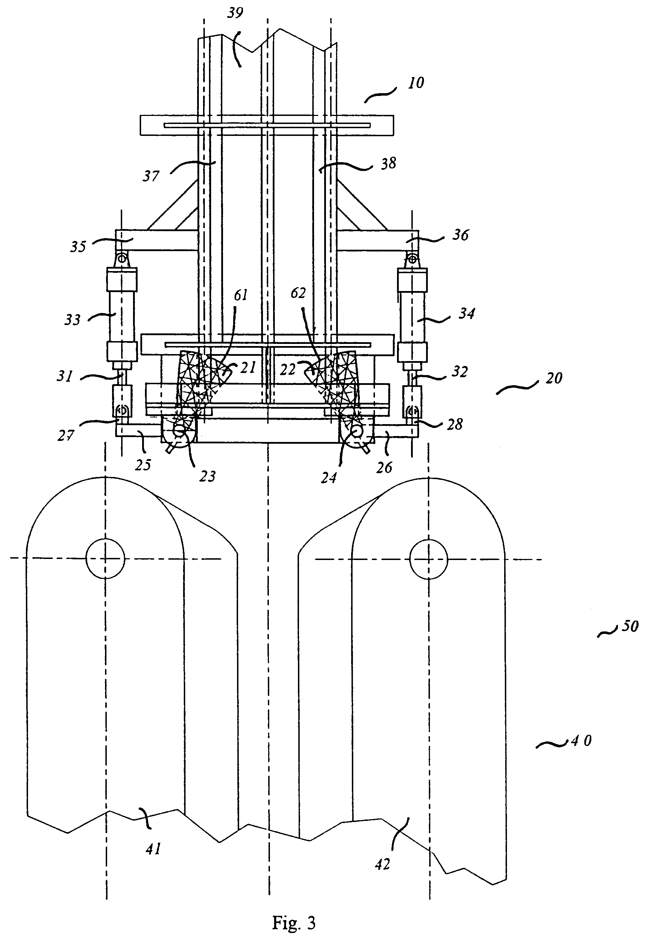

The closed state of the runway barrier means according to the first embodiment of the present invention is shown in a top view in Fig. 3. Two jaws 21,22 which make up a gate are provided on respective sides of the runway 10. In the closed position the cross-section of the runway 10 is reduced sufficiently that an animal can not proceed from the runway 10 to the pair of conveyors 41,42. The jaws 21,22 may be moved to touch in the centre of the runway 10 and completely block it. In a preferred alternative to the first embodiment of the present invention the jaws do not touch in the middle of the runway 10 but are spaced apart. With this latter arrangement the animal in the runway 10 still has eye contact with the handling area 50 and in particular with the rear of the animal in front. It has been found by experiment that the maintenance of eye contact with the animal in front has a calming influence on the animal remaining in the runway 10 possibly due to the general herding instinct of farm animals.

The jaws 21,22 may be made of metal such as steel, stainless steel or aluminium of rubber wood, plastic or any other similar material. Further, the jaws 21,22 may be made of rods or mesh sufficiently close together the animals can not pass through. If the barrier means 20 is operated in unheated rooms it is preferred if metal jaws are heated to prevent a cold shock to the animal when it touches the jaws 21,22. Alternatively jaws 21,22 may be made of a material with a low thermal conductivity such as rubber which has a "warm" feel.

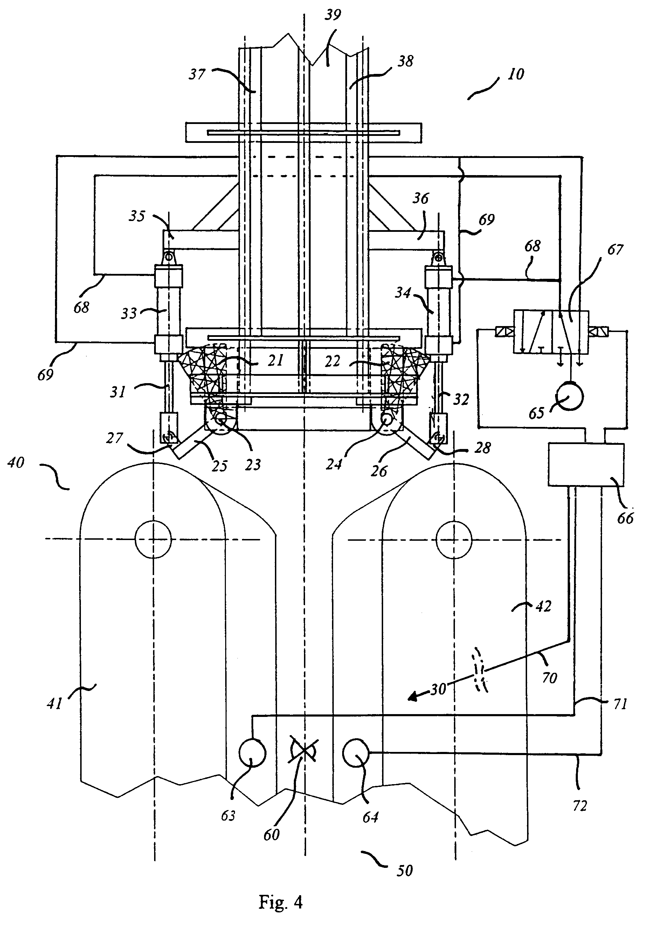

It is particularly advantageous if the jaws 21,22 may rotate around the axes 23,24 and the surfaces 61,62 facing towards the runway 10 are convex. The convex surfaces 61,62 provide rounded surfaces against which an animal may push without hurting itself. It is preferable if the axes 23,24 lie far enough apart that the surfaces 61,62 in the closed condition lie generally at an angle to the centre line of the runway 10 with the inner edges of the jaws 21,22 being closer to the handling area 50 than the outer edges (as shown in Fig. 3). It is particularly preferred if the cross-section of each jaw 21,22, as viewed from the top is a truncated sector of a circle with rounded edges as shown in Figs. 3 and 4. When the animal pushes against the surfaces 60,61 the jaws 21,22 tend to rotate about the axes 23,24 in such a way that the jaws 21,22 move together thus gripping the animal more tightly. From experiments it has been found that, in contrast to conventional gates, this gripping action and the increased resistance to forward motion is sensed by the animal without alarm or fear and the animal voluntarily takes a step backwards. The pressure reduces on the animal as the backward movement of the animal allows the jaws 21,22 to move slightly apart.

The open state of the runway barrier means 20 is shown in Fig. 4. The cylinder rods 31,32 of pneumatic cylinders 33,34 are rotationally attached to the "L" shaped joining pieces 25,27; 26,28 which themselves are attached to axles 23,24. By applying air pressure to the cylinders 33,34 the cylinder rods 31,32 extend and cause the jaws 21,22 to rotate about the axes 23,24 away from the centre of the runway 10. Pneumatic cylinders are preferred for the cylinders 33,34 as the compressibility of the air in the cylinders 33,34 provides a cushioning effect to the movement of the jaws 21,22. Thus, when the animal moves forward the presure on the head of the animal by jaws 21,22 increases. When the animal then takes a step backwards the compressed air returns the jaws 21,22 to their original position thus releasing the pressure on the animal. The invention is not however limited to pneumatic cylinders and hydraulic cylinders may be used. Further the invention is not limited to cylinders. The rods 31,32 may be driven forward by other mechanical means such as a rack and pinion. The pinion may be driven by an electric motor or any other suitable motor. The rods 31,32 may be dispensed with and the jaws 21,22 may be rotated by electric or other types of motors driving directly on the axles 23,24 or through gears or a series of gears.

Fig. 4 also shows schematically a modification to the first embodiment of the present invention. One or more sensors 63,64 senses or sense when an animal enters the handling area 50 and sends a signal to the electronic control circuit 66 along the wires 71,72. The sensors 63,64 may be light sensitive devices receiving light from a lamp 60 placed at a distance such that an animal entering the handling area 50 interrupts the light beam. Alternatively, the sensors 63,64 may be optical sensors of the reflective type and be suitable for detecting the contrast in between the colour of the skin of the animal (e.g., light for pigs) and the background. Alter a suitable delay the control circuit 66 sends a signal to the pneumatic control valve 67. Control valve 67 moves in accordance with the signal to supply air from the reservoir 65 to the cylinders 33,34 along pipes 68 and vents pipes 69 in order to retract rods 31,32 and close jaws 21,22. Alter a suitable delay the control circuit 66 sends a signal to the control valve 67 to stop supplying air and to close off pipes 68,69. The jaws 21,22 at this time are in their closed position and the animal can still move them slightly by compressing the air in the cylinders 33,34. The operation of the sensor 63,64, the circuit 66 and the control valve 67 is optimised so that only one animal at a time enters the handling area 50. After stunning of the animal in the stunning unit 30 a signal is automatically sent from the stunning unit 30 to the electronic control circuit 66 along the wires 70. The circuit 66 sends a signal to the pneumatic control valve 67 to allow air to pass through pipes 69 and to vent pipes 68 in order to extend cylinder rods 31,32. The jaws 21,22 are opened and the cycle mentioned above is repeated automatically. By these means only one animal at a time is allowed into the handling area 50 and the sequencing of the animals is controlled automatically.

The cylinders 33,34 as shown in Figs. 3 and 4 are attached to frame elements 35,36 of the runway 10. The invention is not limited to this. The cylinders 33,34 may be attached to the conveyors 41,42 so that the delivery unit of the present invention may be delivered as a combined conveyor and delivery unit alternatively a combined conveyor, stunner and delivery unit.

The present invention is not limited to an optical sensor 63,64 but any suitable optical e.g., infra-red, proximity, heat or mechanical sensor may be used. Further the invention is not limited to the control circuit details and components mentioned above. Any suitable control circuitry may be used which carries out the functions necessary to open and close the jaws 21,22 at the appropriate times.

The invention is not limited to a stunner unit 30. The signal for indicating the end of the handling procedure can be generated by any other means. For instance the signal may be generated by an operator closing a switch when the handling is complete. Alternatively, if an animal is to be branded or weighed in the handling area 50 a signal from a further sensor may be generated automatically when the animal leaves the area 50.

In an experiment carried out with the modification to the first embodiment described with respect to Fig. 4, the stunning unit 30, only a single pair of conveyors 41,42, the barrier means 20 including elastic gripping means in accordance with the present invention and the sensor 67 and its control circuitry were run continuously for several hours without human interference or control. A throughput of 350 pigs per hour was achieved and there was no single incident of incorrect stunning caused by pigs entering the stunning unit 30 too close together. Further, examination of the meat from the carcasses indicated uniform and consistently excellent quality of meat with excellent colour, pH and an absence of 'blood spots'. The pigs were observed to co-operate with the barrier means 20 without showing signs of distress or alarm. Nor were the pigs damaged by the operation of the barrier means 20.

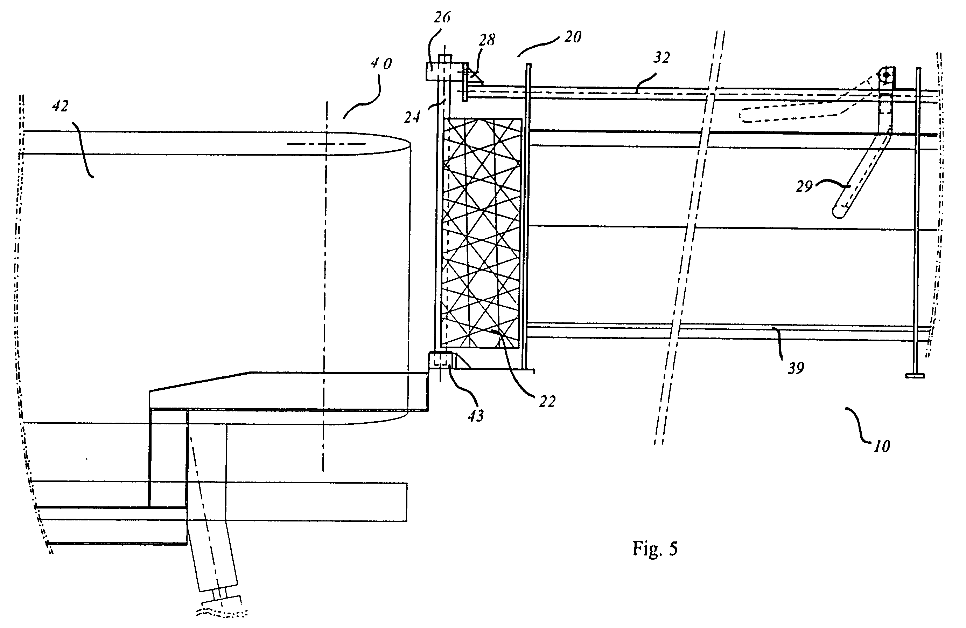

Fig. 5 shows a side view of a second embodiment of the present invention in which the same reference numbers are used for the same items as in the first embodiment. Fig. 5 shows more clearly the axle 24 journalled in the bearing 43 and the jaw 22 attached to the axle 24. In this embodiment rod 32 is not attached to a cylinder but extends to a position close to the start of the runway 10. An operator standing at this position can close and open the jaw 22 by pushing or pulling on the rod 32. In this embodiment it is preferable if the jaw 21 is fixed so that the operator only has to manipulate the rod 32 to open and close one jaw 22 of the barrier means 20. It is preferable if the fixed jaw 21 is not fixed completely but is partly rotatable about the axes 23 and that the rotating jaw 22 may also rotate around axis 23, in both cases preferably against an elastic resistance such as a spring so that the elastic gripping action mentioned with respect to the first embodiment is maintained.

Alternatively both the rods 31, and 32 may be pushed back and forwards simultaneously by a single operator by linking them together by connecting levers and rods (not shown).

As an alternative to either the first or second embodiment, a latch means 29 may be provided as shown in Fig. 5. When the animal moves forwards, the latch rod 29 rotates upwards out of the way. As soon as the animal has passed the latch means 29 it falls back under its own weight and prevents the animal from going backwards down the runway 10. Further in either the first or second embodiment, a device may be included on the runway side of the barrier means 20 e.g., between the latch means 29 and the barrier means 20, which urges the animal forward by means of a small electric shock or similar. The urging means can be triggered automatically by the opening of the jaws 21,22, e.g., by a limit switch feeding a signal to the control circuit 66, which in turn sends a signal to activate the urging means.

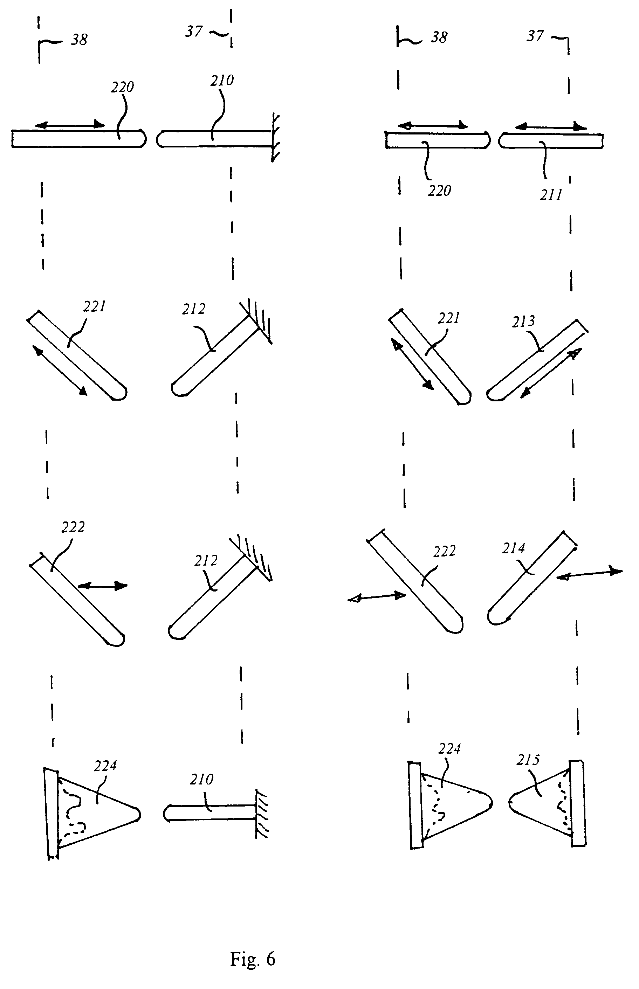

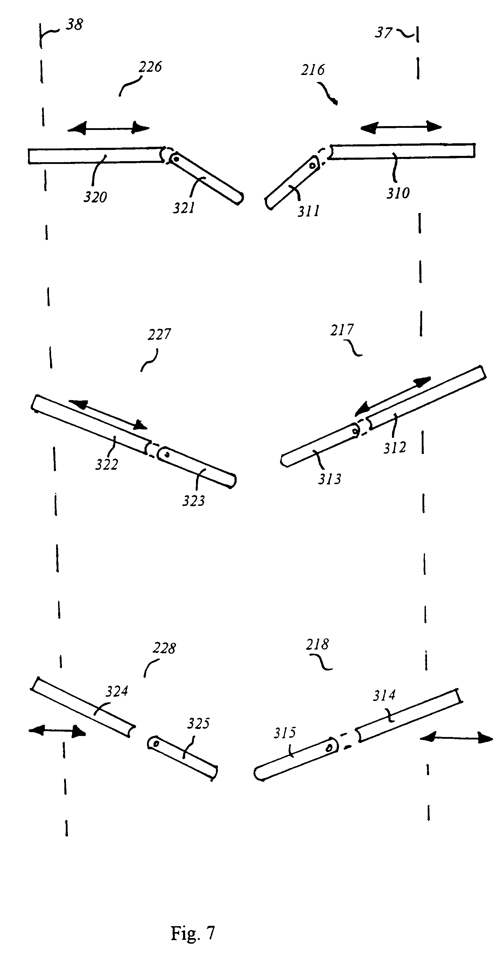

Figs. 6 and 7 show various alternative arrangements for the barrier means 20 including jaws 21,22. All the arrangements are viewed from the top. The runway may be assumed to extend towards the bottom of the figure in each case. The jaws are shown in the closed position. The arrows indicate which of the jaws are movable and in which direction they move. All the jaws may be used with any of the embodiments of the invention. The cross-section of the jaws as viewed from the top is only shown schematically in the drawings. Suitable cross-sections may be chosen, which avoid frightening or damaging the animal e.g., by providing well-rounded, smooth contours towards the animal. The gap between the jaws in the closed position may be varied as required depending on the size, shape and strength of the animal. The jaws shown in Figs. 6 and 7 may be made from any of the materials and constructions described for the first and second embodiments. The jaws shown in Figs 6 and 7 may be used with any of the constructions of the apparatus according to the present invention described with respect to the first and second embodiments.

With reference to Fig. 6 jaws 210 and 212, are gates which may be fixed to the wall 37 and extend from the wall 37 to the centre of the runway 10. Jaw 220 is located roughly perpendicular to wall 38 and is movable along its length to block or open the runway 10.

Jaws 221 and 212 are angled with respect to the runway 10. Jaw 221 is movable along its length to open and close the runway 10. Alternatively, two jaws 221,213 may be provided which move along their lengths. Jaws 222 and 214 are located in a similar way to jaws 221,213 but move perpendicularly to the runway 10. The angle of the jaws 212,221,213,222,214 need not be 45° as shown, but may be any suitable angle.

Jaws 224 and 215 are formed by inflatable bags. The bags may be inflated by air or other means. The animal is allowed through the barrier means 20 by deflating the air bag.

With reference to Fig. 7 only arrangements are shown with both jaws movable. The invention is not limited thereto. One jaw may be fixed as described with reference to Fig. 6. The characteristic of all the arrangements of the jaws shown in Fig. 7 is that they have elastic gripping means. As has been described with reference to the first and second embodiments of the invention, the jaws 21,22 are so designed that as the animal pushes against them with its head partially between them, the jaws move together and increase the pressure on the animal. This pressure is reversible, i.e. the grip by the jaws is elastic and reduces if the animal moves back. In the first and second embodiments this elastic grip was provided by the shape and length of the jaws and their rotation about the axes 23,24 as well as by the use of pneumatic cylinders which may provide a cushioning effect. Elastic gripping jaws need not only be achieved by shape and location of the jaws. For instance jaws 220,221,222,211,213,214 of Fig. 6 may be provided with sensors which sense when the animal pushes against them. Activators can then move the jaws together slightly i.e., to close them a little, and exert more force on the animal and to open the jaws when the animal eases back. Thus the animal experiences the same elastic gripping effect as with the first and second embodiments.

Jaws 216,226 of Fig. 7 comprise a first portion 310,320 and a second portion 311,321 which is rotationally mounted with respect to the first portion 310,320. The amount of rotation of the second portion 311,321 is preferably limited with respect to the first portion 310,320 by stops. It is preferable if the second portion 311,321 is elastically connected to the first portion so that as the animal pushes against the second portions 311,321, the resisting force to rotation of the second portion 311,321 increases. The elastic gripping operation of the first and second portions 312,314,322,324;313,315,323,325 of jaws 217,227,218,228 is similar to that described for first and second portions 310,320;311,321 except the locations and movements of jaws 217,227,218,228 are different from those of 216,226. The cross-section of second portions 311,321,313,315,323,325 as viewed from the top may be a truncated sector of a circle with rounded edges as described for the first and second embodiments.

In all the embodiments of the present invention and modifications thereof it is particularly preferred if there is a gap between the jaws when they are in the closed position. This gap should preferably be as wide or wider than the typical eye spacing of the animal to be delivered and sufficiently narrower than the typical shoulder width of the animal that it can not squeeze through. Further the jaws should be high enough to prevent the animal jumping over them or the runway 10 should be provided with a ceiling. The jaws should extend close enough to the floor 39 of the runway 10 that an animal cannot crawl or slither underneath them.

## Claims

1. A unit for delivering animals to a handling area, comprising:
a runway (10) for delivering animals towards said handling area (50), said runway having outer walls (37, 38) or fencing;
runway barrier means (20);
said runway barrier means (20) including at least first and second gate means (21,22; 210-215, 220-224; 310-315, 320-325);
said first and second gate means (21,22; 210-215, 220-224; 310-315, 320-325) extending respectively from said outer walls or fencing (37, 38) of said runway (10) to first locations adjacent the centre of said runway (10) in a first position for preventing animals from leaving the runway (10) and entering the handling area (50); and
at least one of said first or second gate means (21,22; 210-215, 220-224; 310-315, 320-325) being adapted to be moveable from said corresponding first location to a second position for allowing animals to enter said handling area (50), characterised in that:
said at least one of said first and second gate means (21,22; 210-215, 220-224; 310-315, 320-325) co-operates with the other of said first and second gate means (22,21; 220-224, 210-215; 320-325, 310-315) to provide elastic gripping means for elastically gripping the head of the animal when said first and second gates means (21,22; 210-215, 220-224; 310-315, 320-325) are in said first position adjacent the centre of said runway (10), so that when the animal moves forward the gripping pressure increases and said at least one of said first and second gate means (21,22; 210-215, 220-224; 310-315, 320-325) moves further towards the centre of said runway (10) and when the animal moves back the gripping pressure reduces.

2. A unit according claim 1, further comprising control means (66) for controlling the movement of said at least one of said first and second gate means (21,22; 210-215, 220-224; 310-315, 320-325) between said first and second positions.

3. A unit according to claims 1 or 2, further comprising sensing means (63,64) for sensing when an animal has entered the handling area (50) and for outputting a first signal.

4. A unit according to claim 3 as dependent on claim 2, wherein said control means (66) is adapted to receive said first signal from said sensor means (63,64) and to activate said at least one of said first and second gate means (21,22; 210-215, 220-224; 310-315, 320-325) to move from the said second position to said first position.

5. A unit according to any of claims 1 to 4, further comprising signal generating means for outputting a signal when the processing of an animal in the handling area (50) is complete.

6. A unit according to claim 5 as dependent on any of claims 2 to 4, wherein said control means (66) is adapted to receive said second signal from said signal generating means and to move said at least one of said first and second gate means (21,22; 210-215, 220-224; 310-315, 320-325) from said first position to said second position.

7. A unit according to any of claims 1 to 6, further comprising urging means for urging an animal towards the handling area (50).

8. A unit according to claim 7 as dependent on any of claims 2 to 6, wherein said control means (66) is adapted to activate said urging means when said at least one of said first and second gate means (21,22; 210-215, 220-224; 310-315, 320-325) has reached said second position.

9. A unit according to any of claims 1 to 8, further comprising at least one conveyor (41,42).

10. A unit according to any of claims 1 to 9, further comprising a stunning unit (30).

11. A unit according to any of claims 1 to 10, wherein the gap between said first and second gate means (21,22; 210-215, 220-224; 310-315, 320-325), when they are in the closed or first position, is as wide or wider than the eye spacing of the animal and narrower than the shoulders of the animal.

12. Method of delivering animals from a runway (10) having outer fencing (37, 38) or walls to a handling area (50), comprising the steps of:
step 1: introducing animals into said runway (10) and allowing them to move towards said handling area (50);
step 2: allowing a first animal into said handling area (50) from said runway (10);
step 3: moving at least a first gate means (21,22; 210-215, 220-224; 310-315, 320-325) from a first position adjacent said outer fences (37,38) or walls to a second position adjacent the centre of said runway (10) so as to prevent a second animal from entering said handling area (50), said first gate means (21,22; 210-215, 220-224; 310-315, 320-325) cooperating with a second gate means (21,22; 210-215, 220-224; 310-315, 320-325) to elastically grip the head of the animal when in said second position adjacent the centre of said runway (10), so that when the animal moves forward the gripping pressure increases and said first gate means (21,22; 210-215, 220-224; 310-315, 320-325) moves further towards the centre of said runway (10) and when the animal moves back the gripping pressure reduces; and
step 4: after processing of said first animal, moving at least said first gate means (21,22; 210-215, 220-224; 310-315, 320-325) back to said first position and repeating steps 2 to 4.

13. A method according to claim 12, further comprising the step of:
step 5: urging the second animal to move towards the handling area (50) after moving at least said first gate means (21,22; 210-215, 220-224; 310-315, 320-325) to said first position in step 4 and repeating steps 2 to 5.

14. A method according to any of claims 12 or 13, wherein the moving step 3 includes moving at least said first gate means (21,22; 210-215, 220-224; 310-315, 320-325) so that a gap is left in the centre of the runway (10), said gap being at least as wide as the eye spacing of the animal and narrower than the shoulders of the animal.

## Patentansprüche

1. Einheit zur Zuführung von Tieren in einen Bearbeitungsbereich, die folgendes umfaßt:
einen Treibgang zum Zuführen von Tieren auf den Bearbeitungsbereich zu, wobei der Treibgang eine Umzäunung oder Außenwände aufweist;
eine Treibgangsperrvorrichtung;
wobei die Treibgangsperrvorrichtung mindestens eine erste und eine zweite Torvorrichtung aufweist;
wobei sich in einer ersten Stellung die erste und die zweite Torvorrichtung jeweils von den Außenwänden oder der Umzäunung des Treibganges bis zu ersten Stellen, die sich neben der Mitte des Treibganges befinden, erstrecken, um zu verhindern, daß die Tiere den Treibgang verlassen und in den Bearbeitungssbereich eintreten; und
wobei mindestens eine der ersten und zweiten Torvorrichtungen so ausgeführt ist, daß sie aus der entsprechenden ersten Stelle in eine zweite Stellung bewegbar ist, damit die Tiere in den Bearbeitungsbereich eintreten können;
wobei mindestens eine der ersten und zweiten Torvorrichtungen, wenn in der ersten Stellung neben der Mitte des Treibganges, eine elastische Greifeinrichtung zum elastischen Ergreifen des Kopfes des Tieres enthält, so daß der Greifdruck durch das Bewegen der mindestens einen Torvorrichtung weiter auf die Mitte des Treibganges zu erhöht wird, wenn sich das Tier vorwärtsbewegt, und sich der Greifdruck vermindert, wenn sich das Tier zuruckbewegt.

2. Einheit nach Anspruch 1, weiterhin mit einer Steuervorrichtung zum Steuern der Bewegung der mindestens einen Torvorrichtung zwischen die erste und zweite Stellungen.

3. Einheit nach Anspruch 1 oder 2, weiterhin mit einer Erfassungsvorrichtung zum Erfassen, ob ein Tier in den Bearbeitungsbereich eingetreten ist, und zum Ausgeben eines ersten Signals.

4. Einheit nach Anspruch 3, sofern er von Anspruch 2 abhängig ist, bei welcher die Steuervorrichtung derart ausgebildet ist, daß sie das erste Signal von der Erfassungsvorrichtung empfängt und die mindestens eine Torvorrichtung antreibt, so daß sie sich aus der zweiten Stellung in die erste Stellung bewegt.

5. Einheit nach einem der Ansprüche 1 bis 4, weiterhin mit einer Signalerzeugungsvorrichtung zum Ausgeben eines Signals, wenn die Verarbeitung eines Tieres im Bearbeitungsbereich beendet ist,

6. Einheit nach Anspruch 5, sofern er von einem der Ansprüche 2 bis 4 abhängig ist, bei der die Steuervorrichtung derart ausgebildet ist, daß sie das zweite Signal von der Signalerzeugungsvorrichtung empfängt und die mindestens eine Torvorrichtung aus der ersten Stellung in die zweite Stellung bewegt.

7. Einheit nach einem der Ansprüche 1 bis 6, weiterhin mit einer Treibvorrichtung zum Vorwärtstreiben eines Tieres auf den Bearbeitungsbereich zu.

8. Einheit nach Anspruch 7, sofern er von einem der Ansprüche 2 bis 6 abhängig ist, bei der die Steuervorrichtung derart ausgebildet ist, daß sie die Treibvorrichtung antreibt, wenn die mindestens eine Torvorrichtung die zweite Stellung erreicht.

9. Einheit nach einem der Ansprüche 1 bis 8, weiterhin mit mindestens einem Förderer.

10. Einheit nach einem der Ansprüche 1 bis 9, weiterhin mit einer Betäubungseinheit.

11. Einheit nach einem der Ansprüche 1 bis 10, bei der die Lücke zwischen den ersten und zweiten Torvorrichtungen, wenn sie sich in der geschlossenen oder ersten Stellung befinden, ebenso breit oder breiter als der Abstand zwischen den Augen des Tieres und enger als die Schultern des Tieres ist.

12. Verfahren zum Zuführen von Tieren aus einem Treibgang mit einer Umzäunung oder Außenwänden in einen Bearbeitungsbereich, welches die folgenden Schritte umfaßt:
Schritt 1: Einführen von Tieren in den Treibgang und ermöglichen, daß sie sich auf den Bearbeitungsbereich zu bewegen;
Schritt 2: Durchlassen eines erstes Tieres aus dem Treibgang in den Bearbeitungsbereich;
Schritt 3: Bewegen mindestens einer Torvorrichtung aus einer ersten Stellung neben der Umzäunung oder den Außenwänden in eine zweite Stellung neben der Mitte des Treibganges, um ein zweites Tier daran zu hindern, daß es in den Bearbeitungsbereich eintritt, wobei in der zweiten Stellung neben der Mitte des Treibganges die Torvorrichtung den Kopf des Tieres elastisch ergreift, so daß der Greifdruck durch das Bewegen der mindestens einen Torvorrichtung weiter auf die Mitte des Treibganges zu erhöht wird, wenn sich das Tier vorwärtsbewegt und sich der Greifdruck vermindert, wenn sich das Tier zurückbewegt; und
Schritt 4: Bewegen der mindestens einen Torvorrichtung wieder in die erste Stellung nach der Behandlung des ersten Tieres und wiederholen der Schritte 2 bis 4.

13. Verfahren nach Anspruch 12, weiterhin mit einem Schritt 5: Das zweite Tier antreiben, so daß es sich auf den Bearbeitungsbereich zu bewegt, nach dem Bewegen der mindestens einen Torvorrichtung in die erste Stellung in Schritt 4, und wiederholen der Schritte 2 bis 5.

14. Verfahren nach Anspruch 12 oder 13, bei dem der Bewegungsschritt 3 weiterhin aufweist: das Bewegen mindestes einer Torvorrichtung, so daß eine Lücke in der Mitte des Treibganges gelassen wird, wobei die Lücke mindestens ebenso breit wie der Abstand zwischen den Augen des Tieres und enger als die Schultern des Tieres ist.

## Revendications

1. Unité pour amener des animaux à une zone de traitement, comprenant:
un passage pour amener des animaux vers ladite zone de traitement, ledit passage ayant une clôture extérieure ou des parois extérieures;
un moyen de barrière pour le passage;
ledit moyen de barrière pour le passage comportant au moins des premier et deuxième moyens de porte;
lesdits premier et deuxième moyens de porte s'étendant respectivement depuis ladite clôture extérieure ou lesdites parois extérieures dudit passage jusqu'à des premiers emplacements adjacents au centre dudit passage dans une première position pour empêcher que des animaux ne quittent le passage et ne pénètrent dans la zone de traitement; et
au moins l'un desdits premier et deuxième moyens de porte étant adapté pour être déplaçable depuis ledit premier emplacement correspondant jusque dans une deuxième position pour permettre aux animaux d'entrer dans ladite zone de traitement;
ledit au moins un desdits premier et deuxième moyens de porte incluant, lorsqu'il se trouve dans ladite première position adjacente au centre dudit passage, un moyen de prise élastique pour saisir élastiquement la tête de l'animal de sorte que, lorsque l'animal avance, la pression de prise augmente par ledit au moins un moyen de porte étant amené davantage vers le centre dudit passage et, lorsque l'animal recule, la pression de prise diminue.

2. Unité selon la revendication 1, comprenant en outre un moyen de commande pour commander le mouvement dudit au moins un moyen de porte entre lesdites première et deuxième positions.

3. Unité selon la revendication 1 ou 2, comprenant en outre un moyen de détection pour détecter lorsqu'un animal est entré dans la zone de traitement et pour délivrer un premier signal.

4. Unité selon la revendication 3 lorsqu'elle dépend de la revendication 2, dans laquelle ledit moyen de commande est adapté pour recevoir ledit premier signal dudit moyen de détection et pour activer ledit au moins un moyen de porte afin qu'il se déplace de ladite deuxième position dans ladite première position.

5. Unité selon l'une quelconque des revendications 1 à 4, comprenant en outre un moyen de génération de signal pour délivrer un signal lorsque le traitement d'un animal dans la zone de traitement est terminé.

6. Unité selon la revendication 5 lorsqu'elle dépend de l'une quelconque des revendications 2 à 4, dans laquelle ledit moyen de commande est adapté pour recevoir ledit deuxième signal dudit moyen de génération de signal et pour déplacer ledit au moins un moyen de porte depuis ladite première position dans ladite deuxième position.

7. Unité selon l'une quelconque des revendications 1 à 6, comprenant en outre un moyen de poussée pour pousser un animal vers la zone de traitement.

8. Unité selon la revendication 7 lorsqu'elle dépend de l'une quelconque des revendications 2 à 6, dans laquelle ledit moyen de commande est adapté pour activer ledit moyen de poussée lorsque ledit au moins un moyen de porte a atteint ladite deuxième position.

9. Unité selon l'une quelconque des revendications 1 à 8, comprenant en outre au moins un convoyeur.

10. Unité selon l'une quelconque des revendications 1 à 9, comprenant en outre une unité d'assommoir.

11. Unité selon l'une quelconque des revendications 1 à 10, dans laquelle l'espace entre les premier et deuxième moyens de porte, lorsqu'ils se trouvent dans la position fermée, ou première position, est aussi large ou plus large que l'espacement entre les yeux de l'animal, et plus étroit que les épaules de l'animal.

12. Procédé pour amener des animaux depuis un passage ayant une clôture extérieure ou des parois extérieures jusqu'à une zone de traitement, comprenant les étapes consistant à:
étape 1 : introduire les animaux dans ledit passage, et les laisser se déplacer vers ladite zone de traitement;
étape 2: laisser entrer un premier animal dans ladite zone de traitement depuis ledit passage;
étape 3 : déplacer au moins un moyen de porte d'une première position adjacente à ladite clôture extérieure ou aux parois extérieures dans une deuxième position adjacente au centre dudit passage de manière à empêcher un deuxième animal d'entrer dans ladite zone de traitement, ledit premier moyen de porte saisissant élastiquement la tête de l'animal lorsqu'il se trouve dans ladite deuxième position adjacente au centre dudit passage, de sorte que lorsque l'animal avance, la pression de prise augmente par ledit premier moyen de porte étant ramené davantage vers le centre dudit passage et, lorsque l'animal recule, la pression de prise diminue; et
étape 4: après le traitement dudit premier animal, ramener ledit au moins premier moyen de porte dans ladite première position et répéter les étapes 2 à 4.

13. Procédé selon la revendication 12, comprenant en outre l'étape de:
étape 5 : pousser le deuxième animal pour le faire avancer vers la zone de traitement après avoir amené au moins ledit un moyen de porte jusque dans ladite première position dans l'étape 4, et répéter les étapes 2 à 5.

14. Procédé selon l'une quelconque des revendications 12 ou 13, dans lequel l'étape de déplacement 3 inclut le déplacement d'au moins un moyen de porte de sorte qu'un espace soit laissé au centre du passage, ledit espace étant au moins aussi large que l'espacement entre les yeux de l'animal et plus étroit que les épaules de l'animal.
